# EUROPEAN PATENT APPLICATION

(11) **EP 1 700 898 A1**
(43) Date of publication of application: **13.09.2006**
(21) Application number: 06075554.3
(22) Date of filing: 08.03.2006
(51) Int. Cl.: C09K 21/02

(54) **Improved fire-resistant material**

(30) Priority: 10.03.2005 BE 200500127
(71) Applicant: Fleury, Albert, 9120 Haasdonk (BE)
(72) Inventor: Fleury, Albert, 9120 Haasdonk (BE)
(74) Representative: Donné, Eddy

(57) **Abstract**

Improved fire-resistant material, characterised in that it is mainly composed of silicone and/or latex and/or another such binding agent, carbon and sodium silicate.

## Description

The present invention concerns an improved fire-resistant material which can be applied in the house building sector and the industry or the like.

In particular, the invention concerns a fire-resistant material which swells when warmed up or heated, possibly due to a fire, and thus has a retarding effect on the heat transfer and/or seals openings so as to prevent flames from spreading or oxygen from being supplied to the seat of fire.

The known fire-resistant materials that are now considered to be effective, environmental-friendly and minimally damaging to health are disadvantageous in that they are not flexible and consequently cannot or can hardly be used in applications requiring a certain play between two or more parts in between which for example in case of fire a sealing is required, for example in case of fire.

Moreover, these known fire-resistant materials are only suitable for processing in a limited number of production techniques, such as for example extrusion, such that not any shape whatsoever can be obtained.

Materials provided with carbon which are considered to be fire-resistant at present are already known, but which are disadvantageous in that the carbon is released over time and/or when heated, which is harmful to our health, as a result of which it is necessary to provide a covering around the fire-resistant material so as to check the carbon locally.

On the other hand, sodium silicate is well known as a fire-resistant swelling product, but a major disadvantage is that sodium silicate loses its qualities when it gets into contact with moisture, possibly coming from the atmospheric humidity.

The invention aims to provide an effective solution to the above-mentioned and other problems and, to that end, the improved fire-resistant material according to the invention is mainly composed of silicone and/or latex or the like, carbon and sodium silicate.

According to a special embodiment, the carbon consists for at least a fraction of graphite.

The combined provision of carbon and sodium silicate in latex and/or silicone results in a fire-resistant material which swells considerably when being heated, for example due to a fire.

Depending on the ratios of silicone or of latex, of carbon and of sodium silicate, the fire-resistant material according to the invention has other swelling qualities. Any possible mutual ratios of silicone or latex, of carbon and of sodium silicate are within the scope of the invention.

According to a special embodiment, the fire-resistant material according to the invention contains less than 50% silicone and/or latex.

Another major advantage of the combined adding of carbon and sodium silicate consists in that the sodium silicate holds the carbon in the silicone or in the latex, so that there is no risk of carbon being released in the environment.

A fraction of the sodium silicate is driven out when being heated, for example due to a fire, such that a crust is formed which retains the carbon in the silicone or in the latex.

On the other hand, the silicone or latex protects the sodium silicate from moisture, for example coming from the atmospheric humidity, as a result of which it retains its favourable qualities.

The thus obtained silicone or latex is fire-resistant and it stays flexible and water-tight, which makes the product very suitable to be used as sealing or filler, for example at the passage of a pipe through a wall.

Indeed, the pipe can be guided through an opening in a wall, and the space between the pipe and the wall can be filled with the improved fire-resistant material according to the invention.

The opening is in this way sealed water-tight and the pipe is fixed in the wall in a sufficiently flexible manner, such that tensions are avoided.

In case of a possible fire, the pipe may melt, but the improved fire-resistant material will swell such that the opening which would thus be created is sealed. It is well known that such a scaling prevents any unwanted oxygen supply in case of a fire, which can strongly limit the fire damage.

Moreover, a property of the improved fire-resistant material according to the invention is that, when it is heated, it will first drive out the sodium silicate, as a result of which the fire-resistant material according to the invention becomes sticky.

This property is very favourable as it offers the fire-resistant material according to the invention more application possibilities for restricting fire damage by cutting off the oxygen supply.

Thus, for example, false ceilings can be made by clamping the improved fire-resistant material in -somewhat overlapping strips under the unfinished ceiling. The strips must not necessarily be welded in this case.

Indeed, in case of a possible fire, the strips will become sticky, and as a result the overlapping parts will adhere to each other. In this manner, a possible air supply through openings in the overlying ceiling is prevented.

When heated, possibly due to a fire, a fraction of the sodium silicate is driven out, such that a crust is formed which retains the carbon in the silicone.

The improved fire-resistant material according to the invention can be provided as a layer on all sorts of products serving as a support.

On the other hand, it is also possible to provide fibres in the improved fire-resistant material according to the invention, as a result of which the material can be made self-supporting.

The improved fire-resistant material according to the invention is suitable for numerous production techniques. Thus, it can be extruded or it can be cast in a mould, either or not under pressure as in the case of injection moulding or pressure die-casting or the like.

It should be noted that the material can also be coextruded during the extrusion process of for example a section or a pipe.

Such a co-extrusion prevents for example that a section and a fire-resistant strip must be made in separate operations and that the strip must be provided on the section during a subsequent operation.

It is clear that the combined addition of carbon and of sodium silicate can also be applied to other such binding agents, such as for example polyurethanes or glues.

The present invention is by no means limited to the above-described embodiments; on the contrary, such an improved fire-resistant material can be made according to different variants while still remaining within the scope of the invention.

## Claims

1. Improved fire-resistant material, **characterised in that** it is mainly composed of silicone and/or latex and/or another such binding agent, carbon and sodium silicate.

2. Improved fire-resistant material according to claim 1, **characterised in that** at least a fraction of the carbon is graphite.

3. Improved fire-resistant material according to claim 1 or 2, **characterised in that** the carbon and the sodium silicate are uniformly mixed in the silicone or in the latex.

4. Improved fire-resistant material according to claim 1 or 2, **characterised in that** it comprises fibres.

5. Improved fire-resistant material according to claim 1, **characterised in that** the sodium silicate, when heated, is at least partly driven out of the silicone, the latex or the binding agent, as a result of which the binding agent becomes sticky.
